# EUROPEAN PATENT APPLICATION

(11) **EP 2 669 255 A1**
(43) Date of publication of application: **04.12.2013**
(21) Application number: 11856722.1
(22) Date of filing: 25.11.2011
(51) Int. Cl.: C02F 3/34, C02F 3/28

(54) **LIQUID WASTE TREATMENT DEVICE AND LIQUID WASTE TREATMENT METHOD**

(30) Priority: 24.01.2011 JP 2011012065
(71) Applicant: Meidensha Corporation, Tokyo 141-0032 (JP)
(72) Inventor: FUKUZAKI, Yasuhiro, Tokyo 141-6029 (JP); NAKAMURA, Yasuhiro, Tokyo 141-6029 (JP); KAWAKUBO, Yuki, Tokyo 141-6029 (JP)
(74) Representative: Manitz, Finsterwald & Partner GbR
(86) International application number: PCT/JP2011/077202
(87) International publication number: WO 2012/101894

(57) **Abstract**

Water quality in a reactor tank of UASB process is kept in a state in which reaction activity of microorganism is high. A waste water treatment device 1 has a reactor tank 10 that is supplied with water to be treated from a bottom 100 of the reactor tank 10 and discharges the water to be treated as treated water from an upper portion of the reactor tank 10 after the water to be treated is brought into contact with the microorganism; and a pH control tank 18 that pH-adjusts a part of the treated water flowing out of the reactor tank 10. The pH control tank 18 is connected to a side surface of the reactor tank 10 through a return pipe 181b or 181c. The part of the treated water discharged from the reactor tank 10 is pH-adjusted so that its pH is in a pH range in which reaction activity of microorganism agglomerates becomes high. The pH-adjusted treated water is injected to a position that is separate from a supply portion 100 of the water to be treated in a flow direction of the water to be treated in a bed 19 in the reactor tank 10.

## Description

### TECHNICAL FIELD

The present invention relates to a waste water treatment technology using liquid microorganism agglomerates (granules of self-granulated sludge which are formed by microorganisms and/or a microbial film containing a substance that is a nucleus).

### BACKGROUND ART

A UASB (Upflow Anaerobic Sludge Bed) method is a method in which, water to be treated is supplied into the reactor tank from a reactor tank bottom that is filled with the microorganism agglomerates, and organic substance (organic matter) and nitrogen compound (nitrogenous substance) contained in the water to be treated are brought into contact with the microorganism agglomerates in an upward water flow that occurs due to this supply of water to be treated then are decomposed by metabolism reaction of the microorganism (disclosed, for example, in Patent Documents 1 to 4 etc.).

A most remarkable feature of the UASB method is that extremely heavy load can be treated by using high-densely agglutinated microorganism agglomerates without requiring any filler that is a carrier of the microorganism. The microorganism agglomerates correspond to a form called the granule formed by self-granulation of the microorganism and the microbial film containing the substance that is the nucleus. Most of the microorganism agglomerates such as the granules and the nucleus-containing microbial film have excellent sedimentation. When the water to be treated is supplied from the reactor tank bottom, under a proper upward flow speed condition, a state called a sludge bed (a bed), in which a few floating microorganism agglomerates are present at a reactor tank top and numerous microorganism agglomerates sediment or deposit and stay at a lower portion in the reactor tank, is formed.

With respect to ammonia-containing waste water, there are, as a pre-treatment, a nitrification process in which ammonia is oxidized to nitric acid by aerobic bacteria, and as a post-treatment, a denitrification process in which the nitric acid is deoxidized to nitrogen gas by anaerobic heterotrophic bacteria using the organic substance. However, in recent years, anaerobic ammonium oxidation (commonly called "anammox") bacteria that allows the denitrification from the ammonia and nitrous acid has been focused on, and the UASB method is applied also to the present method. In a case where the anammox bacteria is used, by nitrifying approximately half of the ammonia to the nitrous acid in the pre-treatment, the denitrification process by the anammox bacteria of the post-treatment is allowed, therefore an aeration power required for the aerobic process is greatly reduced. Further, since an anammox reaction of the pre-treatment occurs by autotrophic bacteria, the organic substance required for the denitrification by the heterotrophic bacteria does not become necessary. This process therefore does not require supply of the organic substance that is needed for a low-C/N (carbon-nitrogen) ratio waste water. This process is such excellent nitrogen treatment method. According to a report, although nitrogen load that is applicable in an anammox reactor tank is different depending on processes, in a demonstration experiment, it is 2.8 ∼ 5.4 kg-N/m³/day (e.g. Non-Patent Document 2).

In the UASB method, water quality (such as pH of the water to be treated and a concentration of reactant) in the reactor tank is controlled so as to achieve a state in which the microorganism in the reactor tank keeps high activity. For instance, in the Patent Document 1, by agitating a liquid phase around a water-to-be-treated injection point in the reactor tank, deactivation or a decrease of the activity (activation) of the anammox bacteria which is caused by a local increase of concentration of nitrite nitrogen at a water-to-be-treated injection part is prevented. Further, in the Patent Document 2, a plurality of inflow points of the water to be treated containing the nitrite nitrogen are provided in a height direction of the reactor tank, and an injection concentration of the nitrite nitrogen at a lowest stage (a most upstream side) is set to be 300 mg-N/L or less, thereby preventing the deactivation or the decrease of the activity (activation) of the anammox bacteria which is caused by the local increase of concentration of nitrite nitrogen at the water-to-be-treated injection part.

However, in a case where, by injection of the water to be treated (or by injection of mixed water of the water to be treated and dilution water), inhibition factor of the water quality in the reactor tank is not solved or removed (e.g. in a case where an increase of pH with progress of microbial reaction process occurs), there is a risk that merely separate injection of the water to be treated into the reactor tank can not keep the water quality of the reactor tank in the state in which the activity of the microorganism becomes high. For instance, in the Patent Document 2, activity inhibition of the anammox bacteria appears from the nitrite nitrogen concentration approx. 50 ∼ 200 mg/L, and the higher the nitrite nitrogen concentration, the greater the inhibition action (or the inhibition influence). Thus, in a case where the nitrite nitrogen concentration in the water to be treated is high, it is difficult, by merely changing the injection of the water to be treated to the separate injection, to remove the factor in inhibiting the activity of the anammox bacteria.

In addition, if an amount of the dilution water mixed into the water to be treated is increased in order to keep the water quality of the reactor tank in the state in which the activity of the microorganism becomes high, a cost of the injection of the dilution water is increased, or an in-pipe-water-flowing amount of the dilution water to the reactor tank is increased. If the in-pipe-water-flowing amount of the dilution water to the reactor tank is increased, there is a risk that an in-pipe-water-flowingspeed willbe a rate limiting factor in the reactor tank then the load will be limited. Additionally, in a case where dissolved oxygen of a certain concentration or more is present in the dilution water, there is a possibility that the dissolved oxygen will destroy an anaerobic atmosphere in the reactor tank. Thus, upon the injection of the dilution water, it has to be doubly careful about introducing the dissolved oxygen into the reactor tank.

Accordingly, in order to efficiently perform a stable anaerobic ammonium oxidation process, a device or a scheme is required so that an environment (a condition) that inhibits the activity of the anammox bacteria is not created. In addition, it is necessary to keep the highly active anammox bacteria in the reactor tank and also necessary that numerous anammox bacteria should participate in process reaction.

### CITATION LIST

### PATENT DOCUMENT

Patent Document 1: Japanese Patent Application Publication No. JP2003-033795
Patent Document 2: Japanese Patent Application Publication No. JP2003-033793
Patent Document 3: Japanese Patent Application Publication No. JP62-279891
Patent Document 4: Japanese Patent Application Publication No. JP9-225491

### NON PATENT DOCUMENT

Non-Patent Document 1: FUKUZAKI Yasuhiro, and 5 others, "Technique of high-speed treatment of high concentration nitrogen waste water by anammox reaction", Journal of Water and Waste, The industrial Water Institute, September, 2010, Vol. 52, No. 9, P719-727
Non-Patent Document 2: "Report on estimation of nitrogen removal technique using anammox reaction", Japan Sewage Works Agency Estimation Committee, Heisei 22, March

### SUMMARY OF THE INVENTION

A waste water treatment device (waste water treatment equipment) and a waste water treatment method of the present invention are characterized in that, in an UASB type reactor tank, pH of treated water that is treated in this reactor tank is adjusted or controlled to a suitable pH for the microorganism held in the reactor tank to produce a nitrogen removal reaction in the high active state, and this pH-adjusted treated water is injected to the bed of the reactor tank, then pH in this bed is controlled so as to be a suitable pH to keep the reaction activity of the microorganism which forms the microorganism agglomerates.

That is, for solving the above problems, a waste water treatment device by which water to be treated is brought into contact with microorganism in an ascending water flow and nitrogen compound contained in the water to be treated is decomposed, the waste water treatment device comprises: a reactor tank that is supplied with the water to be treated from a bottom of the reactor tank and discharges the water to be treated as treated water from an upper portion of the reactor tank after the water to be treated is brought into contact with the microorganism; a pH control tank that controls a part of the treated water discharged from the reactor tank so that pH of the part of the treated water is adjusted to a pH range in which reaction activity of the microorganism is high; and a line that injects the treated water pH-adjusted in the pH control tank to a position, the position being separate from a supply portion of the water to be treated in a flow direction of the water to be treated, in a sedimentary layer of the microorganism which sediments in the reactor tank.

In the waste water treatment device, the line injecting the pH-adjusted treated water is set so that the pH-adjusted treated water is injected to a position of 50% or less of a height of the bed.

Further, in the waste water treatment device, the pH-adjusted treated water is injected without being mixed with the water to be treated.

Furthermore, in the waste water treatment device, a plurality of the lines that inject the pH-adjusted treated water are provided in the flow direction of the water to be treated in the reactor tank.

In addition, for solving the above problems, a waste water treatment device by which water to be treated is brought into contact with microorganism in an ascending water flow and nitrogen compound contained in the water to be treated is decomposed, the waste water treatment device comprises: a reactor tank that is supplied with the water to be treated from a bottom of the reactor tank and discharges the water to be treated as treated water from an upper portion of the reactor tank after the water to be treated is brought into contact with the microorganism; a pH control tank that controls a part of the treated water discharged from the reactor tank so that pH of the part of the treated water is adjusted to a pH range in which reaction activity of the microorganism is high; an air bubble separation member that is provided in the reactor tank and separates the microorganism and air bubbles generated by a reaction between the microorganism and the water to be treated; and a line that injects the treated water pH-adjusted in the pH control tank to a position that is below the air bubble separation member and is separate from a supply portion of the water to be treated in a flow direction of the water to be treated.

Additionally, for solving the above problems, a waste water treatment method by a waste water treatment device, the waste water treatment device having a reactor tank in which contact reaction between water to be treated and microorganism occurs and a pH control tank that controls treated water after being treated in the reactor tank so that pH of the treated water is adjusted to a pH range in which reaction activity of the microorganism is high, the method comprises: supplying the water to be treated into the reactor tank from a bottom of the reactor tank and discharging the water to be treated as treated water from an upper portion of the reactor tank after the water to be treated is brought into contact with the microorganism; controlling a part of the discharged treated water in the pH control tank so that pH of the part of the discharged treated water is adjusted to the pH range in which reaction activity of the microorganism is high; and injecting the pH-adjusted treated water to a position, the position being separate from a supply portion of the water to be treated in a flow direction of the water to be treated, in a bed in the reactor tank.

Moreover, for solving the above problems, a waste water treatment method by a waste water treatment device, the waste water treatment device having a reactor tank in which contact reaction between water to be treated and microorganism occurs, an air bubble separation member that is provided in the reactor tank and separates the microorganism and air bubbles generated by a reaction between the microorganism and the water to be treated and a pH control tank that controls a part of treated water after being treated in the reactor tank so that pH of the part of the treated water is adjusted to a pH range in which reaction activity of the microorganism is high, the method comprises: supplying the water to be treated into the reactor tank from a bottom of the reactor tank and discharging the water to be treated as treated water from an upper portion of the reactor tank after the water to be treated is brought into contact with the microorganism; controlling a part of the discharged treated water in the pH control tank so that pH of the part of the discharged treated water is adjusted to the pH range in which reaction activity of the microorganism is high; and injecting the treated water pH-adjusted in the pH control tank to a position that is below the air bubble separation member and is separate from a supply portion of the water to be treated in a flow direction of the water to be treated.

### BRIEF DESCRIPTION OF THE DRAWINGS

Fig. 1 is a schematic block diagram showing a waste water treatment system according to a reference example of the present invention.
Fig. 2 is a graph showing pH variation of water to be treated with a height direction of a reactor tank of the waste water treatment system according to the reference example of the present invention.
Fig. 3 is a schematic block diagram showing a waste water treatment device according to an embodiment 1 of the present invention.
Fig. 4 is a drawing; (a) shows a relationship between a height (H) of a reactor tank and a pH value in the reactor tank in a case where pH-adjusted treated water is not injected from a side surface of the reactor tank, (b) shows a relationship between the height (H) of the reactor tank and the pH value in the reactor tank in a case where the pH-adjusted treated water is injected from the side surface of the reactor tank.
Fig. 5 is a schematic block diagram showing a waste water treatment device according to an embodiment 2 of the present invention.

### EMBODIMENTS FOR CARRYING OUT THE INVENTION

### [Reference Example]

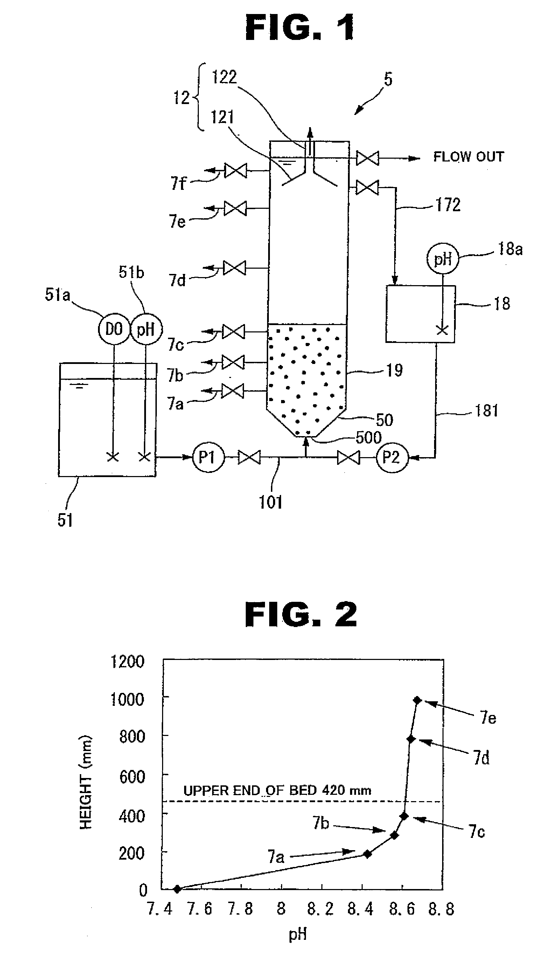

Prior to the present invention, the inventors planted the anammox bacteria in a reactor tank 50 and reacted ammonia nitrogen with nitrite nitrogen in a waste water treatment device 5 shown in Fig. 1 as a reference example. The inventors then measured pH change with a height direction of this reactor tank 50.

### (Configuration of device)

As shown in Fig. 1, the waste water treatment device 5 of the reference example has a pH adjustment tank (a pH control tank) 18, the reactor tank 50 and an air bubble collection pipe 12.

An after-mentioned artificial waste water tank 51 is connected to a bottom 500 of the reactor tank 50 through a supply pipe 101. The water to be treated is supplied into the reactor tank 50 from the bottom 500, and after the water to be treated is brought into contact with a bed 19 in the reactor tank 50, the water to be treated is discharged as treated water from an upper portion of the reactor tank 50. The water to be treated is supplied, by a pump P1, to the reactor tank 50 through the supply pipe 101 that is connected to a lower endportion of the reactor tank 50. As shown in Fig. 1, the reactor tank 50 is formed into a cylindrical shape. An inner circumferential surface, around the bottom 500, of the reactor tank 50 has a lower-side-tapered shape so that the microorganism agglomerates gather and accumulate at the bottom and efficiency of the contact between the water to be treated and the microorganism agglomerates is increased.

Further, a circulation pipe 172 for returning a part of the treated water to the reactor tank 50 is provided at an upper side surface of the reactor tank 50. On a side surface of the reactor tank 50, a plurality of water sampling pipes 7a ∼ 7f are provided in the height direction of the reactor tank 50.

The air bubble collection pipe 12 is formed by a conical-shaped collecting cone 121 and a cylinder portion 122 that is vertically connected to an upper end opening of the collecting cone 121. The air bubble collection pipe 12 is arranged coaxially with the reactor tank 50 in the reactor tank 50. The air bubble collection pipe 12 collects air bubbles generated from the bed 19, and exhausts the air bubbles into the atmosphere through the cylinder portion 122 connected to a ceiling portion of the reactor tank 50.

The pH adjustment tank 18 is provided to be connected to the reactor tank 50 through the circulation pipe 172, and a part of the treated water is flown to the pH adjustment tank 18 through the circulation pipe 172. Further, the pH adjustment tank 18 is provided with a pH meter 18a, and pH of the treated water is adjusted to a predetermined pH by 0.5M H₂SO₄ in the pH adjustment tank 18. The pH-adjusted treated water is returned to the reactor tank 50 again for circulation by a pump P2 through a circulation pipe 181.

The artificial waste water tank 51 is connected to the bottom 500 of the reactor tank 50 through the supply pipe 101. The artificial waste water tank 51 is provided with a dissolved oxygen concentration meter (DO meter) 51a and a pH meter 51b. The water to be treated in the artificial waste water tank 51 is supplied into the reactor tank 50 by a pump P1 through the supply pipe 101. Here, in the reference example, water to be treated that is adjusted to composition shown in a table 1 is previously provided in the artificial waste water tank 51, then degassing or deaeration by nitrogen gas is performed so that a dissolved oxygen concentration of the water to be treated is 0.5 mg/L or less.

**[Table 1]**

| ARTIFICIAL WASTE WATER COMPOSITION | |
|---|---|
| (NH₄)₂SO₄ | 100∼450 mg-N/L |
| NaNO₂ | 100∼450 mg-N/L |
| KH₂PO₄ | 54.4 mg/L |
| NaHCO₃ | 105.0 mg/L |
| CaCl₂ · 2H₂O | 30.0 mg/L |
| FeSO₄ · 7H₂O | 5.0 mg/L |
| EDTA | 5.6 mg/L |
| pH | 7.2 ∼ 7.5 |
| DO | 0 ∼ 0.5 mg/L |

In the waste water treatment device 5 having the above configuration, in order to examine a pH characteristic of the water to be treated that flows in the reactor tank 50 in a high load operation, the ammonia nitrogen and the nitrite nitrogen were reacted together in an anammox bacteria-existing state with a nitrogen volume load (NLR) being 7.0 kg-N/m³/day. Then, the water to be treated is sampled from the water sampling pipes 7a ∼ 7f, and each pH of the sampled water to be treated was measured. pH variation of the water to be treated with the height direction of the reactor tank 50 during the progress of the anammox reaction is shown in Fig. 2.

As the reaction by the anammox bacteria, a reaction formula indicated by the following expression (1) has been suggested.

1.0NH₄⁺ + 1.32NO₂⁻ + 0.066HCO₃⁻ + 0.13H⁺ → 1.02N₂ + 0.26NO₃⁻ + 0.066CH₂O_{0.5}N_{0.15} + 2.03H₂O (1)

According to the expression (1), since H⁺ in the water to be treated is consumed with the progress of the anammox reaction, as shown in Fig. 2, the higher the water to be treated is located in the reactor tank 50, the higher the pH is (pH of the water to be treated located at the upper portion of the reactor tank 50 is higher). Regarding this pH variation, a striking pH variation occurs in a case where pH buffer nature of the water to be treated that flows into the reactor tank 50 is low.

In Fig. 2, with respect to the pH of the water to be treated in the reactor tank 50, although pH is 7.5 at an inflow portion 500 of a lowest portion of the reactor tank 50, pH of the water to be treated, sampled at the water sampling pipe 7a that is positioned at a 180 mm higher position from the lowest portion of the reactor tank 50 (which corresponds to approx. 50% of a height of the bed), is already 8.43, and this exceeds a pH range (pH 6.5 ∼ 8.0) which is favorable for the anammox reaction. Then, a height at which pH is out of or exceeds an upper limit (pH 8.0) of this favorable pH is a 100 mm higher position from the lowest portion of the reactor tank 50 (which corresponds to 24% of the height of the bed).

In addition, the higher the water to be treated is located from the water sampling pipe 7b, the gentler (or the more gradual) the increase of the pH of the water to be treated that flows into the reactor tank 50. That is, when the water to be treated is flown into the reactor tank 50 from the bottom 500 of the reactor tank 50, as shown in Fig. 2, the pH variation occurs especially in an almost all area of the bed 19 where the microorganism agglomerates exist. Further, the pH in the reactor tank 50 is out of or exceeds the upper limit of the favorable pH of the anammox bacteria at a position close to an upward water flow side of the inflow portion 500 of the lowest portion of the reactor tank 50.

From the foregoing, in the case where the water to be treated is supplied from the bottom 500 of the reactor tank 50, an area where the activity of the anammox bacteria can be kept is limited to a part, which is located close to the inflow portion, of the bed 19.

Then, since contribution of the anammox bacteria, which exist in a part where the pH exceeds the upper limit of the favorable pH and the activity of the anammox bacteria is inhibited, to the reaction is small, even if numerous anammox bacteria is held in an area of the bed 19, there is a risk that an increase in nitrogen removal performance can not be expected. Further, since the reaction of the expression (1) speeds up with the progress of the high load treatment operation in which the nitrogen volume load (NLR) is set to be further high, the pH variation in an upward water flow direction in the area of the bed 19 with respect to an inflow initial pH of the water to be treated supplied to the bottom 500 occurs quickly. Then, since the area of the bed 19, which is affected by the activity inhibition due to the exceedance of the upper limit of the favorable pH, increasingly extends, even if a total amount of the anammox bacteria is sufficiently secured, the increase in the nitrogen removal performance proportional to its amount of the bacteria can not be expected, on the contrary, there is a possibility that the nitrogen removal performance will deteriorate. In addition, if an overburden occurs due to this inhibition, since the treated water remains with its substrate concentration held at a high concentration, there is a risk that a dilution effect of the pH-adjusted treated water disappears and deterioration of the treatment is accelerated.

Further, the microorganism agglomerates which have floated above the bed 19 (in the reference example, the microorganism agglomerates sediment or deposit up to an approx. 420 mm higher position from the bottom of the reactor tank) together with the air bubbles hardly contribute to the nitrogen removal because these microorganism agglomerates are affected by the activity inhibition due to the pH. Furthermore, the longer the stay time of the microorganism agglomerates at the upper portion is, the more the decrease in the activity of the anammox bacteria. Therefore, an operation to immediately return the microorganism agglomerates floating together with the air bubbles to the bed 19 is necessary. The microorganism agglomerates contact or collide with the collecting cone 121, thereby separating the air bubbles from the microorganism agglomerates, consequently the microorganism agglomeratesseparatedfrom the air bubbles go down and return to the bed 19.

In view of the measurement result of the pH variation in the reactor tank 50 of the waste water treatment device 5 of the reference example, the inventors made the present invention. In the following description, embodiments of the present invention will be explained with reference to the drawings.

### [Embodiment 1]

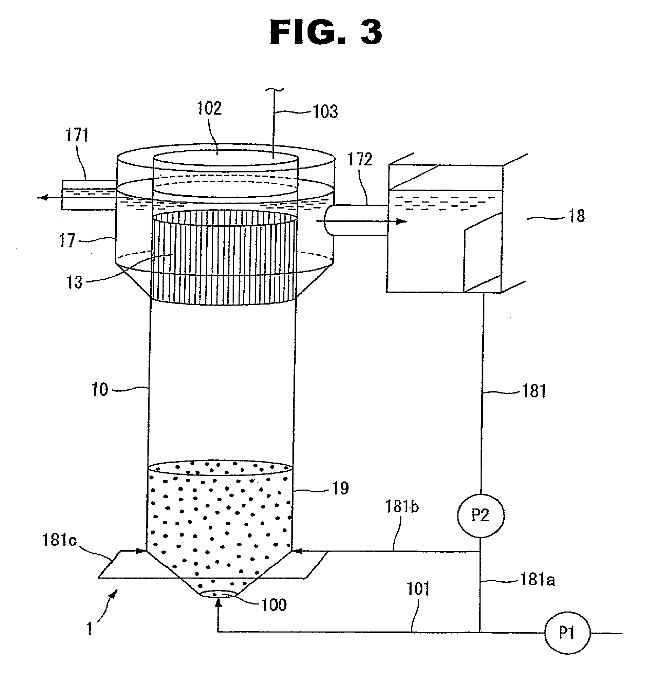

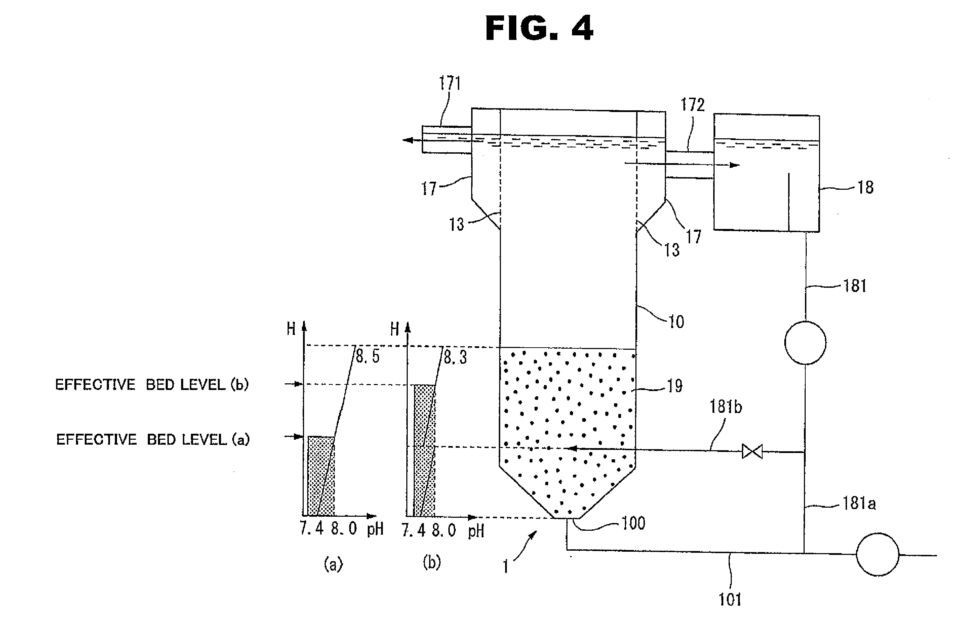

Awaste water treatment device 1 and a waste water treatment method by this device, according to an embodiment 1 of the present invention, will be explained with reference to Figs. 3 and 4.

### (Configuration of Device)

As shown in Fig. 3, the waste water treatment device 1 has a reactor tank 10, a pH adjustment tank (a pH control tank) 18 and a side surface screen 13. A return pipe 181 that is connected to the pH adjustment tank 18 branches into return pipes 181a ∼ 181c.

The water to be treated is supplied into the reactor tank 10 from a bottom 100, and after the water to be treated is brought into contact with a bed 19 of the microorganism agglomerates that sediment or deposit at a lower portion of the reactor tank 10, the water to be treated is discharged as treated water from an upper portion of the reactor tank 10. The bed 19 (a sludge bed) is a layer formed by the microorganism agglomerates that sediment or deposit and stay at the lower portion in the reactor tank 10. The microorganism agglomerates correspond to a form called the granule formed by self-granulation of the microorganism and the microbial film containing the substance that is the nucleus. As the microorganism forming this microorganism agglomerates, for instance, it is anammox bacteria. A load amount of nitrogen compound (nitrogenous substance) supplied into the reactor tank 10 is fixed according to a volume of the bed 19, a substrate concentration of the water to be treated, an amount of the water to be treated, etc. Then, the microorganism that multiplies with continuation of an operation is drawn as necessary at regular intervals so that a height of the bed 19 is maintained at a predetermined height. Thus, the height of the bed 19 in the reactor tank 10 is previously set as one of operation conditions of the reactor tank 10.

The water to be treated is supplied, by a pump P1, to the reactor tank 10 through a supply pipe 101 that is connected to a lower end portion of the reactor tank 10. With respect to the water to be treated, for instance, water to be treated containing ammonia is previously treated by aerobic ammonia-oxidizing bacteria in a treatment tank (not shown), then water to be treated, a part of the ammonia of which is converted into nitrous acid by such treatment, can be used as the water to be treated. The water to be treated is not especially limited. For example, water to be treated containing ammonia nitrogen and nitrite nitrogen etc. can be supplied so that the reaction indicated by the expression (1) efficiently occurs.

The reactor tank 10 is formed into a cylindrical shape. An inner circumferential surface, around the bottom 100, of the reactor tank 10 has a lower-side-tapered shape so that the microorganism agglomerates gather and accumulate at the bottom and efficiency of the contact between the water to be treated and the microorganism agglomerates is increased. An outflow pipe 171 by which the treated water flows out of the waste water treatment device is connected to the upper portion of the reactor tank 10, and also a circulation pipe 172 by which a part of the treated water returns to the reactor tank 10 is connected to the upper portion of the reactor tank 10 with the circulation pipe 172 communicating with a treated water separation chamber 17. The circulation pipe 172 is connected to the pH adjustment tank 18 that controls or adjusts pH of the treated water flowing out from the treated water separation chamber 17.

pH of a liquid phase in the reactor tank 10 could exceed 8.5 by the reaction indicated by the expression (1), thus there occurs a case where activity of the microorganism agglomerates decreases or lowers. Therefore, the treated water is pH-adjusted (pH-controlled) in the pH adjustment tank 18 so that the pH of the treated water is around neutrality (e.g. pH 7.1 ∼ 7.4), then the pH-adjusted treated water is returned to the reactor tank 10, thereby stabilizing the activity of the microorganism agglomerates.

The pH adjustment tank 18 is connected to the bottom 100 of the reactor tank 10 through the return pipe 181a and the supply pipe 101, then the water to be treated supplied from the supply pipe 101 is diluted with the treated water pH-adjusted in the pH adjustment tank 18. Further, the pH adjustment tank 18 is connected to side surfaces of the reactor tank 10 through the return pipes 181b and 181c, then the pH-adjusted treated water is injected to an area close to the lower portion of the bed 19 in the reactor tank 10. The pH adjustment tank 18 has a pump for injecting pH control chemical liquid and a mixing unit for mixing the treated water. As the pH control chemical liquid, a well-known chemical agent (e.g. sulfuric acid and hydrochloric acid) applied to water treatment technology could be used. Here, with regard to the return pipes 181b and 181c, a plurality of return pipes could be provided in a flow direction of the water to be treated flowing in the reactor tank 10 (i.e. in a height direction of the reactor tank 10). Also, the injection of the pH-adjusted treated water could be controlled in accordance with a treatment state of the reactor tank 10.

Further, an injection point where the pH-adjusted treated water is injected is not especially limited as long as the injection point is a position where the bed 19 sediments or deposits in the reactor tank 10. Since the water to be treated supplied from the supply pipe 101 is ph-adjusted so as to be in the pH range in which the activity of the anammox reaction becomes high, the injection point where the pH-adjusted treated water is injected is provided at a position that is separate from the supply pipe 101 in the flow direction of the water to be treated. Furthermore, the position of the injection point where the pH-adjusted treated water is injected is not limited to the side surface of the reactor tank 10 as long as the pH-adjusted treated water can be injected to the bed 19. As shown in the reference example, the pH of the water to be treated is out of or exceeds the upper limit (pH 8.0) of the favorable pH for the activity of the anammox bacteria at the 180 mm higher position from the lowest portion of the reactor tank 50 (which corresponds to approx. 50% of the height of the bed 19). Thus, when the injection point where the pH-adjusted treated water is injected into the reactor tank 10 is set to a position which corresponds to 50% or less of the height of the bed 19 in the reactor tank 10, it is possible to keep water quality of the water to be treated flowing in bed 19 in the state in which the activity of the anammox bacteria is high, or it is possible to recover the state in which the activity of the anammox bacteria is high.

The side surface screen 13 separates a liquid phase containing the microorganism agglomerates of an upper layer of the reactor tank 10 into the microorganism agglomerates and the water to be treated. The side surface screen 13 is formed from a slit or lattice (or grid) screen such as a cylindrical-shaped wedge wire screen. A screen scale spacing of this side surface screen 13 is set so as to be smaller than the average particle size of the microorganism agglomerate to render the side surface screen 13 fit for solid-liquid separation of the microorganism agglomerates and the water to be treated. The side surface screen 13 is formed into a cylindrical shape having the same diameter as that of the reactor tank 10, and is set at a circumferential side surface around an upper end of the reactor tank 10. Then, the treated water separation chamber 17 to which the treated water flows through the side surface screen 13 is provided at an outer circumference around this upper end. Here, if an inner surface part of the reactor tank 10 at upper side of the side surface screen 13, which is soaked in the liquid phase, is formed by the slit or the lattice (or the grid) screen such as the wedge wire, the floating microorganism agglomerates are pushed out to an outflow side by the flow of the water to be treated and the side surface screen 13 tends to be clogged with the microorganism agglomerates. Thus, it is desirable that the inner surface part of the reactor tank 10 of the upper portion of the side surface screen 13 have no permeability of the water.

### (Explanation of Operation)

An example of operation of the waste water treatment device 1 will be explained with reference to Fig. 3.

The water to be treated is supplied into the reactor tank 10 from the bottom 100 through the supply pipe 101 by the pump P1. When the water to be treated is supplied into the reactor tank 10, the nitrogen compound contained in the water to be treated is decomposed by the microorganism agglomerates that form the bed 19. For instance, the nitrous acid and the ammonia component contained in the water to be treated are converted into nitrogen gas by the denitrification reaction, indicated by the expression (1) as an example, by the anammox bacteria that is one of bacteria forming the microorganism agglomerates. The nitrogen gas generated from the microorganism agglomerates goes up or ascends toward a liquid level in the reactor tank 10 by the upward water flow (ascending water flow). The microorganism agglomerates existing around the bottom 100 where biological activity is highest could lose sedimentation by the attachment of the air bubble of the gas due to strong gas generation, and these microorganism agglomerates go up or ascend by the ascending water flow (by riding the ascending water flow). During the ascending of the microorganism agglomerates to which the air bubbles are attached, the air bubbles are released from the microorganism agglomerates by an effect of the ascending water flow, and a part of the microorganism agglomerates having no air bubbles by the release of the air bubbles returns to the bed 19 by its own weight. In this ascending process, the microorganism agglomerates which have the air bubbles without release of the air bubbles and the air bubbles which are released from the microorganism agglomerates go up or ascend in the reactor tank 10 then move to an area around the liquid level. When the ascending air bubbles reach the liquid level, the air bubbles are released, as the gas, into a gas phase in the reactor tank 10 and exhausted out of the waste water treatment device from an exhaust pipe 103. Further, the microorganism agglomerates separated from the air bubbles when floating up to or toward the liquid level go down by their own weight and sink toward the bed 19. In addition, in this area in the reactor tank 10, when the microorganism agglomerates to which the air bubbles are still attached contact or collide with the side surface screen 13 by riding a flow of the treated water flowing out of the waste water treatment device through the side surface screen 13, the air bubbles are released from a part of the microorganism agglomerates and the gas is released into the gas phase, then the microorganism agglomerates separated from the air bubbles go down by their own weight and sink toward the bed 19.

The water to be treated coming up to the upper layer around the liquid level in the reactor tank 10 is discharged out of the waste water treatment device from the outflow pipe 171 of the treated water separation chamber 17 after being solid-liquid-separatedby the side surface screen 13.

In the pH adjustment tank 18, a pH control chemical agent such as acid is added to the treated water flowing out from the treated water separation chamber 17, then the pH of the treated water is adjusted so as to be in the pH range in which the activity of the reaction of the microorganism agglomerates is high. More specifically, the pH of the treated water is adjusted so that the pH of the treated water is around neutrality (pH 7.1 ∼ 7.4). The pH-adjusted treated water is injected to the areas close to the lower portion of the bed 19 in the reactor tank 10 from the return pipe 181 through the return pipes 181b and 181c by a pump P2. As a consequence, a liquid phase condition of the reactor tank 10 can be ph-adjusted to the pH range (e.g. pH approx. 7.5 or less) in which the biological activity of the microorganism agglomerates can be kept. In order to dilute the substrate concentration of the water to be treated, a part of the treated water is supplied into the supply pipe 101 through the return pipe 181a for circulation after being introduced into the pH adjustment system (the pH control system) through the circulation pipe 172.

### (Effect)

According to the waste water treatment device 1, by injecting the pH-adjusted treated water to the bed 19 in the reactor tank 10, it is possible to control the water quality of the bed 19 to be the water quality by which the activity of the anammox bacteria can be kept high.

That is, by injecting the pH-adjusted treated water to the areas close to the lower portion of the bed 19 in the reactor tank 10, the pH increasing by biological treatment can be lowered. In addition, the water to be treated supplied into the reactor tank 10 and reaction product produced by the anammox reaction can be diluted simultaneously. Further, by diluting the water to be treated supplied into the reactor tank 10 by the return of the pH-adjusted treated water, such high concentration substrate as to inhibit the biological activity of the microorganism agglomerates is brought to a concentration level at which the activity of the microorganism agglomerates is not inhibited, then anaerobic biological activity of the bed 19 can be kept. As a result, since it is possible to extend the area where the activity of the microorganism agglomerates can be kept, the waste water treatment with high load can be carried out. Moreover, since the volume of the reactor tank 10 can be effectively used, size reduction of the reactor tank 10 can be realized.

In addition, since the pH-adjusted treated water returned to the reactor tank 10 is the treated water that has flowed in the reactor tank 10, its dissolved oxygen concentration is low. Thus, by using the treated water as the returning water for the pH adjustment of the bed 19, it is possible to lessen the effect of the dissolved oxygen on the anammox bacteria. Here, regarding pH adjustment water (pH control water) injected from the return pipes 181b and 181c, it is not limited to the returning of the pH-adjusted treated water as described in the present embodiment. When a pH-adjusted solution is injected, the effect of the present invention can he obtained.

Additionally, if a plurality of return pipes for injecting the pH-adjusted treated water are provided in the height direction of the reactor tank 10 and also a valve (not shown) is provided in each return pipe, by controlling this valve, the pH adjustment and the dilution of the water to be treated can be performed according to a change of the biological activity in the reactor tank 10 (according to the pH variation and a change of the substrate concentration in the height direction of the reactor tank 10).

As shown in (a) of Fig. 4, in a case where the waste water treatment device 1 is operated with a high nitrogen volume load like the nitrogen volume load (NLR) 7.0 kg-N/m³/day, if the pH-adjusted treated water is not injected, pH of the water to be treated in the reactor tank 10 already increases to pH 8.5 at an almost middle of the height of the reactor tank 10. If the pH of the water to be treated flowing in the reactor tank 10 increases in this way, the activity of the microorganism agglomerates could be inhibited. On the other hand, in the waste water treatment device 1 according to the embodiment of the present invention, by injecting the pH-adjusted treated water into the reactor tank 10 from the side surface of the reactor tank 10, as can be seen in (b) of Fig. 4, an increase of pH due to the reaction in the reactor tank 10 can be suppressed. (b) of Fig. 4 shows that, by injecting the pH-adjusted treated water into the bed 19 in the reactor tank 10, more specifically, by injecting the pH-adjusted treated water to the position which corresponds to 50% or less of the height of the bed 19 in the reactor tank 10, even in the case of a condition shown in (a) of Fig. 4 in which the pH in the reactor tank 10 is out of or exceeds pH 8.0 and the nitrogen removal reaction by the anammox bacteria does not occur due to the pH inhibition, the pH adjustment is performed so as to be in the favorable pH range, then the anammox reaction can be carried out again. That is to say, when the pH-adjusted treated water is injected to the position which corresponds to 50% or less of the height of the bed 19 in the reactor tank 10, in the process operation with the high nitrogen load and/or the low pH buffer nature, it is possible to effectively keep or recover the condition of the favorable pH range. Consequently, an effective area of the bed 19 formed by the fact that the microorganism agglomerates sediment or deposit (the area where the activity of the bed 19 in the reactor tank 10 can be kept) can be extended. Hence, even in the case of the operation of the waste water treatment with the high load, the anaerobic waste water treatment can be performed while keeping the activity of the microorganism agglomerates high.

### [Embodiment 2]

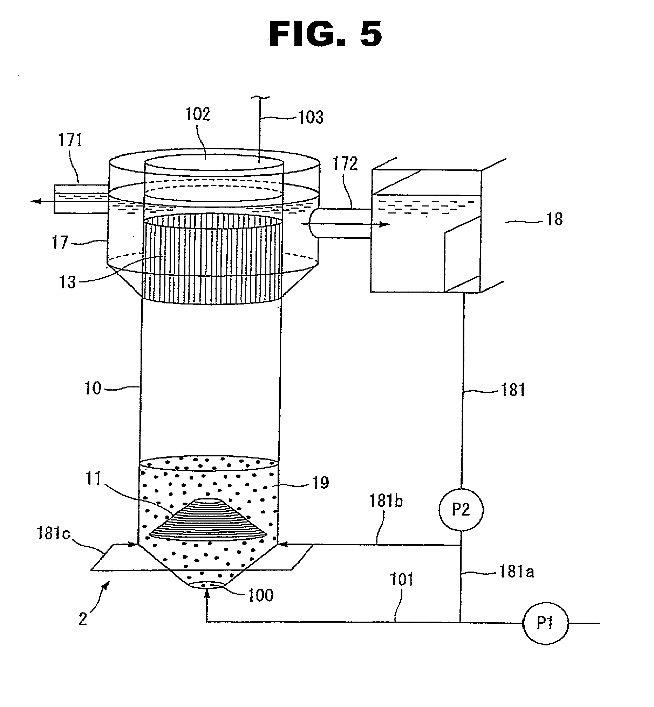

Awaste water treatment device 2 and a waste water treatment method by this device, according to an embodiment 2 of the present invention, will be explained with reference to Fig. 5.

The waste water treatment device 2 of the embodiment 2 shown in Fig. 5 has the same configuration as that of the embodiment 1, except that the waste water treatment device 2 has an air bubble separation member that separates the microorganism and the gas generated by the contact reaction between the microorganism and the water to be treated in the reactor tank 10. Therefore, the same component as that of the embodiment 1 is indicated by the same reference sign, and its explanation is omitted here.

### (Configuration of Device)

The waste water treatment device 2 has the reactor tank 10, the pH adjustment tank (the pH control tank) 18, an air bubble separation screen 11 and the side surface screen 13. The return pipe 181 that is connected to the pH adjustment tank 18 branches into the return pipes 181a ∼ 181c.

The air bubble separation screen 11 separates the air bubbles from the microorganism agglomerates to which the air bubbles of gas generated from the bed 19 staying around the bottom 100 of the reactor tank 10 by microbial reaction are attached, by the fact that the microorganism agglomerates to which the air bubbles are attached contact or collide with the air bubble separation screen 11. The air bubble separation screen 11 is formed from a slit or lattice (or grid) screen such as a conical-shaped wedge wire screen.

In the waste water treatment device 2 of the embodiment 2, the return pipes 181b and 181c are provided at side surfaces of the reactor tank 10 so that the pH-adjusted treated water is injected to the water to be treated below the air bubble separation screen 11.

### (Explanation of Operation)

An example of operation of the waste water treatment device 2 will be explained with reference to Fig. 5.

The water to be treated is supplied into the reactor tank 10 from the bottom 100 through the supply pipe 101 by the pump P1. When the water to be treated is supplied into the reactor tank 10, the nitrogen compound contained in the water to be treated is decomposed by the microorganism agglomerates that form the bed 19. For instance, the nitrous acid and the ammonia component etc. contained in the water to be treated are converted into nitrogen gas by the denitrification reaction by the anammox bacteria that is one of bacteria forming the microorganism agglomerates. The air bubbles such as the nitrogen gas generated from the microorganism agglomerates go up or ascend toward the liquid level in the reactor tank 10 by the upward water flow (ascending water flow). The microorganism agglomerates existing around the bottom 100 where biological activity is highest could lose sedimentation by the attachment of the air bubble of the gas due to strong gas generation, and these microorganism agglomerates go up or ascend by the ascending water flow (by riding the ascending water flow).

The microorganism agglomerates to which the air bubbles are attached contact or collide with the air bubble separation screen 11 set in the bed 19, the air bubbles are therefore released immediately. Thus, since the microorganism agglomerates having no air bubbles by the release of the air bubbles are apt to stay around the bottom 100, a degree of agglomeration of the microorganism agglomerates forming the bed 19 can be increased. On the other hand, the water to be treated that is treated by the bed 19 is solid-liquid-separated by the air bubble separation screen 11, and thereafter moves or flows toward the upper layer of the reactor tank 10 by the ascending water flow (by riding the ascending water flow).

In addition,when the microorganism agglomerates to which the air bubbles are attached contact or collide with the side surface screen 13 by riding the flow of the treated water flowing out of the waste water treatment device through the side surface screen 13, the air bubbles are released from a part of the microorganism agglomerates and the gas is released into the gas phase, then the microorganism agglomerates sink toward the bed 19.

The water to be treated coming up to the upper layer around the liquid level in the reactor tank 10 is discharged out of the waste water treatment device from the outflow pipe 171 of the treated water separation chamber 17 after being solid-liquid-separatedby the side surface screen 13. A part of the treated water in the treated water separation chamber 17 is flown to the pH adjustment tank 18 through the circulation pipe 172.

In the pH adjustment tank 18, the pH control chemical agent such as acid is added to the treated water flowing out from the treated water separation chamber 17, then the pH of the treated water is adjusted up to around neutrality (pH 7.1 ∼ 7.4). The pH-adjusted treated water is supplied to the area below the air bubble separation screen 11 in the reactor tank 10 from the return pipe 181 through the return pipes 181b and 181c by the pump P2. As a consequence, the liquid phase condition of the reactor tank 10 can be ph-adjusted to the pH range (e.g. pH approx. 7.5 or less) in which the biological activity of the microorganism agglomerates can be kept. In order to dilute the substrate concentration of the water to be treated, a part of the treated water is supplied into the supply pipe 101 through the return pipe 181a for circulation after being ph-adjusted in the pH adjustment tank 18.

### (Effect)

According to the waste water treatment device 2, it is possible to separate the air bubbles from the floating microorganism agglomerates and to control the water quality, in the height direction of the reactor tank 10, of the bed 19 to be the water quality by which the microorganism can keep the high activity. Further, the injection point of the pH-adjusted treated water is set to a position where the air bubble separation screen 11 is provided in the reactor tank 10. Thus, in addition to the effects of the waste water treatment device 1 of the embodiment 1, it is possible, by momentum or impetus of the water (or flow of the water) upon injection of the pH-adjusted treated water, to prevent the microorganism agglomerates from being attached to the air bubble separation screen 11. Also, it is possible to facilitate the separation of the air bubbles from the microorganism agglomerates, thereby increasing the degree of agglomeration of the microorganism agglomerates forming the bed 19.

Further, there occurs a case where the water quality of the bed 19 or of the water to be treated changes according to a reaction condition or a reaction treatment time in the reactor tank 10. In the waste water treatment device 2 of the embodiment 2 of the present invention, by injecting the pH-adjusted treated water to the position according to the air bubble separation screen 11, it is possible to control the activity state of the microorganism agglomerates in the reactor tank 10 to be high, regardless of the height of the bed 19. That is, in a case where the bed 19 sediments or deposits below the air bubble separation screen 11, by controlling pH between the bed 19 and the air bubble separation screen 11 so that the activity of the microorganism agglomerates is not inhibited, the floating microorganism agglomerates are returned to the bed 19 again while keeping their activity. Growth of the bed 19 can therefore be promoted. Moreover, in a case where the air bubble separation screen 11 is buried in the bed 19 (the air bubble separation screen 11 is located in the bed 19), by injecting the pH-adjusted treated water to the bed 19 where the air bubbles are generated, it is possible to control the water quality of the area where the microbial reaction is active to be in the state in which the microorganism can keep the high activity.

Here, if the return pipes 181b and 181c are set so that the pH-adjusted treated water directly strikes the air bubble separation screen 11, by momentum or impetus of the pH-adjusted treated water (or flow of the pH-adjusted treated water), the microorganism agglomerates being attached to the air bubble separation screen 11 can be split off.

As explained by the embodiments 1 and 2 above, according to the waste water treatment device and the waste water treatment method of the present invention, by injecting the pH-adjusted treated water to the area close to the lower portion of the bed, the increase of pH in the reactor tank can be suppressed, and also the dilution of the substrate of the water to be treated (or the dilution of the reaction product) can be adequately performed. That is, the pH increase of the water to be treated with progress of the anammox reaction can be suppressed. In addition, in the case where the substrate concentration of the water to be treated increases to the concentration at which there is a possibility that the activity of the anammox bacteria will be inhibited, it is possible to control the pH so as to lessen the effect of the inhibition factor. The reaction activity of the microorganism agglomerates in the reactor tank can therefore be kept high.

Here, the waste water treatment device and the waste water treatment method of the present invention are not limited to the above embodiments, and can be modified as necessary as long as the modifications do not lose their effects. For instance, the shape of the reactor tank is not limited to the cylindrical shape. It could be a rectangle in cross section or polygon tube. Further, the shape of the air bubble separation screen is not limited to the conical shape. As long as the air bubble separation screen has a surface that inclines with respect to the horizontal, in a case of a reactor tank having the polygon tubular shape whose cross section is rectangle, the air bubble separation screen might be formed into a plate shape that extends in a longitudinal direction of the reactor tank and inclines with respect to the horizontal.

Further, although the embodiments in which the denitrification process by the anammox bacteria is performed have been explained, even when the waste water treatment device and the waste water treatment method of the present invention are applied to a conventional denitrification process by the anaerobic heterotrophic bacteria (denitrifying bacteria), the same effects can be gained. That is, a pH range in which the heterotrophic bacteria can keep the high activity is around neutrality, reaction by the denitrifying bacteria occurs as indicated by the following expressions (2) and (3), and it is conceivable that the pH of the water to be treated will increase.

NO₂⁻ + 3H⁺ → 1/2N₂ + H₂O + OH⁻ (2)

NO₃⁻ + 5H⁺ → 1/2N₂ + 2H₂O + OH⁻ (3)

Thus, by pH-adjusting the treated water and supplying it to the bed, it is possible to control the water quality of the water to be treated so as to be in the pH range in which the activity of the heterotrophic bacteria is high. As a consequence, the activity of the heterotrophic bacteria can be kept, and the UASB process with the high load can be carried out.

### EXPLANATION OF REFERENCE

1, 2, 5 ··· waste water treatment device (waste water treatment equipment)
10, 50 ··· reactor tank
11 ··· air bubble separation screen (air bubble separation member)
13 ··· side surface screen
18 ··· pH adjustment tank (pH control tank)
19 ··· bed (sedimentary layer of microorganism)
181, 181a ∼ 181c ··· return pipe

## Claims

1. A waste water treatment device by which water to be treated is brought into contact with microorganism in an ascending water flow and nitrogen compound contained in the water to be treated is decomposed, the waste water treatment device comprising:
a reactor tank that is supplied with the water to be treated from a bottom of the reactor tank and discharges the water to be treated as treated water from an upper portion of the reactor tank after the water to be treated is brought into contact with the microorganism;
a pH control tank that controls a part of the treated water discharged from the reactor tank so that pH of the part of the treated water is adjusted to a pH range in which reaction activity of the microorganism is high; and
a line that injects the treated water pH-adjusted in the pH control tank to a position, the position being separate from a supply portion of the water to be treated in a flow direction of the water to be treated, in a sedimentary layer of the microorganism which sediments in the reactor tank.

2. The waste water treatment device as claimed in claim 1, wherein:
the line injecting the pH-adjusted treated water is set so that the pH-adjusted treated water is injected to a position of 50% or less of a height of the sedimentary layer of the microorganism.

3. The waste water treatment device as claimed in claim 1 or 2, wherein:
the pH-adjusted treated water is injected without being mixed with the water to be treated.

4. The waste water treatment device as claimed in any one of the preceding claims 1 to 3, wherein:
a plurality of the lines that inject the pH-adjusted treated water are provided in the flow direction of the water to be treated in the reactor tank.

5. A waste water treatment device by which water to be treated is brought into contact with microorganism in an ascending water flow and nitrogen compound contained in the water to be treated is decomposed, the waste water treatment device comprising:
a reactor tank that is supplied with the water to be treated from a bottom of the reactor tank and discharges the water to be treated as treated water from an upper portion of the reactor tank after the water to be treated is brought into contact with the microorganism;
a pH control tank that controls a part of the treated water discharged from the reactor tank so that pH of the part of the treated water is adjusted to a pH range in which reaction activity of the microorganism is high;
an air bubble separation member that is provided in the reactor tank and separates the microorganism and air bubbles generated by a reaction between the microorganism and the water to be treated; and
a line that injects the treated water pH-adjusted in the pH control tank to a position that is below the air bubble separation member and is separate from a supply portion of the water to be treated in a flow direction of the water to be treated.

6. A waste water treatment method by a waste water treatment device, the waste water treatment device having a reactor tank in which contact reaction between water to be treated and microorganism occurs and a pH control tank that controls a part of treated water after being treated in the reactor tank so that pH of the part of the treated water is adjusted to a pH range in which reaction activity of the microorganism is high, the method comprising:
supplying the water to be treated into the reactor tank from a bottom of the reactor tank and discharging the water to be treated as treated water from an upper portion of the reactor tank after the water to be treated is brought into contact with the microorganism;
controlling a part of the discharged treated water in the pH control tank so that pH of the part of the discharged treated water is adjusted to the pH range in which reaction activity of the microorganism is high; and
injecting the pH-adjusted treated water to a position, the position being separate from a supply portion of the water to be treated in a flow direction of the water to be treated, in a sedimentary layer of the microorganism which sediments in the reactor tank.

7. A waste water treatment method by a waste water treatment device, the waste water treatment device having a reactor tank in which contact reaction between water to be treated and microorganism occurs, an air bubble separation member that is provided in the reactor tank and separates the microorganism and air bubbles generated by a reaction between the microorganism and the water to be treated and a pH control tank that controls a part of treated water after being treated in the reactor tank so that pH of the part of the treated water is adjusted to a pH range in which reaction activity of the microorganism is high, the method comprising:
supplying the water to be treated into the reactor tank from a bottom of the reactor tank and discharging the water to be treated as treated water from an upper portion of the reactor tank after the water to be treated is brought into contact with the microorganism;
controlling a part of the discharged treated water in the pH control tank so that pH of the part of the discharged treated water is adjusted to the pH range in which reaction activity of the microorganism is high; and
injecting the treated water pH-adjusted in the pH control tank to a position that is below the air bubble separation member and is separate from a supply portion of the water to be treated in a flow direction of the water to be treated.
